# EUROPÄISCHE PATENTANMELDUNG

(11) **EP 0 628 275 A1**
(43) Veröffentlichungstag der Anmeldung: **14.12.1994**
(21) Anmeldenummer: 94108774.4
(22) Anmeldetag: 08.06.1994
(51) Int. Cl.: A47J 27/16, A21B 3/04, G05D 23/20

(54) **Vorrichtung und Verfahren zur Wärmebehandlung von Nahrungsmitteln**

(30) Priorität: 09.06.1993 DE 4319201; 12.02.1994 DE 4404574
(71) Anmelder: Heerig, Hans, D-36115 Hilders (DE)
(72) Erfinder: Heerig, Hans, D-36115 Hilders (DE)
(74) Vertreter: Patentanwälte Ruff, Beier, Schöndorf und Mütschele

(57) **Zusammenfassung**

Bei einem Gerät zur Wärmebehandlung von Nahrungsmitteln mittels eines Fluids, wie Heißluft, Dampf oder Dampf-Luft-Gemischen, ist die auf das Fluid übertragene Energiemenge über die Energieaufnahme der Nahrungsmittel steuerbar. Dabei ist die Energieaufnahme der Nahrungsmittel beispielsweise über eine Temperaturdifferenz zwischen zwei Meßpunkten zu ermitteln. Dies geschieht vorzugsweise durch mindestens zwei Temperaturfühler (19, 20), die in einem Behandlungsraum (5) für die Nahrungsmittel vorgesehen sind. Die Temperaturfühler (19, 20) sind dabei insbesondere in Luftleitkanälen (21, 22) angeordnet.

## Beschreibung

Die Erfindung betrifft eine Vorrichtung und ein Verfahren zur Wärmebehandlung von Nahrungsmitteln.

Für die Wärmebehandlung von Nahrungsmitteln, z.B. für das Auftauen tiefgefrorener Nahrungsmittel oder für das Kochen, Backen oder Braten von Lebensmitteln oder von Speisen mittels Heißluft, mittels Dampf oder mittels eines Dampf-Luft-Gemisches, werden besonders in Gastronomiebetrieben Geräte verwendet, welche ein Gehäuse mit einer Tür aufweisen. Der Innenraum des Gehäuses ist in einen Installationsraum und in einen Behandlungsraum unterteilt. Im Installationsraum ist ein Dampferzeuger angeordnet, der an eine Wasserzuleitung angeschlossen ist und dessen Dampfauslaßöffnung über eine Verbindungsleitung mit dem Behandlungsraum verbunden ist. Der Dampferzeuger wird durch eine steuerbare Wärmequelle beheizt. Im Behandlungsraum ist ein Gebläse angeordnet, welches das im Behandlungsraum vorhandene Fluid aus Luft und/oder Dampf umwälzen kann. Im Behandlungsraum ist außerdem eine Heizung angeordnet, mit der das dort vorhandene Fluid erwärmt werden kann. Diese Heizung wird über einen Temperaturfühler gesteuert, welcher im Behandlungsraum angebracht ist. Am Boden des Behandlungsraumes ist eine Auslaßöffnung vorhanden, an die eine Abflußleitung angeschlossen ist, durch die die tropfbaren Fluide, wie z.B. Kondensat oder aus den Nahrungsmitteln austretende Flüssigkeiten, abgeleitet werden können. Im oberen Bereich des Behandlungsraumes ist eine zweite Auslaßöffnung vorhanden, an welcher ebenfalls eine Ableitung angeschlossen ist, durch welche die nicht tropfbaren Fluide des Behandlungsraumes, z.B. Dampf oder Luft, nach außen geleitet werden können.

Alle bekannten Geräte dieser Art arbeiten bei reinem Heißluftbetrieb zufriedenstellend. Das Auftauen und Erwärmen von Nahrungsmitteln oder das Kochen oder Dämpfen von Nahrungsmitteln wird im allgemeinen mit reinem Dampf durchgeführt, weil man dabei die Kondensationswärme des Dampfes ausnutzen kann, um die Nahrungsmittel rasch zu erwärmen und zu garen. Beim Kondensieren des Naßdampfes auf den zumindest anfänglich kälteren Nahrungsmitteln ist der Wärmeübergang auf die Nahrungsmittel wesentlich intensiver als bei Heißluft. Zu diesem Zweck wird die zu Beginn im Behandlungsraum noch vorhandene Luft durch intensive Dampfzufuhr durch die im oberen Bereich des Behandlungsraumes angeordnete Auslaßöffnung hindurch aus dem Behandlungsraum verdrängt, so daß die weitere Wärmebehandlung in mehr oder minder reiner Dampfatmosphäre bei Siedetemperatur oder bei Kondensiertemperatur erfolgt. Das Garen von Nahrungsmitteln bei höheren Temperaturen ist mit Sattdampf nicht möglich. Das kann nur im Heißluftbetrieb oder im Mischbetrieb, d.h. mit einem Gemisch aus Heißluft und Heißdampf, erfolgen. Dazu wird die Luft im Behandlungsraum und etwa vorhandener Dampf durch die Heizung im Behandlungsraum auf die gewünschte Gartemperatur gebracht und mittels des Gebläses im Behandlungsraum umgewälzt. Ein bestimmter Dampfgehalt im Fluid des Behandlungsraumes ist bei manchen Garvorgängen und bei manchen Nahrungsmitteln deshalb erforderlich, damit bei der höheren Gartemperatur in den Nahrungsmitteln deren Feuchtigkeitsgehalt nicht allmählich verdampft und sie dadurch zumindest oberflächlich austrocknen, wobei unter Umständen durch Ausbleichen auch ihr Aussehen leidet. Das wird im Mischbetrieb dadurch vermieden, daß der Dampfgehalt im Behandlungsraum zumindest nahe dem Sättigungszustand des Fluids aus Heißluft und Heißdampf gehalten wird. So wird der Flüssigkeitsaustritt aus den Nahrungsmitteln weitestgehend vermieden.

Bei den bekannten Geräten treten beim Dampfbetrieb und beim Mischbetrieb mit einem Dampf-Luft-Gemisch einige Nachteile auf.

Für die Steuerung der Heizung des Dampferzeugers ist in einem sogenannten Meßfühlerrohr, das den Behandlungsraum mit der Umgebung des Gerätes verbindet, ein Temperaturfühler angeordnet. Dieser Temperaturfühler mißt in der Anfangsphase die Temperatur der Luft, die vom einströmenden Dampf aus dem Behandlungsraum verdrängt wird. In dem Maße, in dem im Behandlungsraum der Luftanteil abnimmt und der Dampfanteil zunimmt, steigt infolge der unvermeidlichen Vermischungsvorgänge die Temperatur des verdrängten Fluids an und nähert sich allmählich der Dampftemperatur. Wenn beim Erreichen eines bestimmten eingestellten Temperaturwertes vom Temperaturfühler aus die Heizung des Dampferzeugers unterbrochen oder verringert wird, geht wegen der thermischen Trägheit aller Teile die Dampferzeugung noch etwas weiter. Der Dampfüberschuß entweicht durch das Meßfühlerrohr und durch andere Auslaßöffnungen ins Freie. Durch die anfänglich kühleren Nahrungsmittel im Behandlungsraum wird ein Teil des Dampfes kondensiert, wodurch sich das Volumen des im Behandlungsraum vorhandenen Fluids verringert. Der dadurch entstehende Unterdruck im Behandlungsraum sorgt dafür, daß Umgebungsluft in das Meßfühlerrohr eintritt. In Abhängigkeit von dem Hohlraumvolumen des Meßfühlerrohrs, von der Größe seiner Innenoberfläche, von seiner Wärmekapazität und von der Lage des Temperaturfühlers im Meßfühlerrohr erwärmt sich die einströmende Frischluft mehr oder minder stark. Der Temperaturfühler mißt demnach den durch die einströmende Frischluft verursachten Temperaturabfall mit einer gewissen Zeitverzögerung. Hinzu kommt, daß für das Ein-, Aus- oder Umschalten der Heizung des Dampferzeugers ein bestimmter Temperaturunterschied zwischen den beiden Schaltpunkten unvermeidlich ist, wodurch eine weitere Verzögerung bis zum Schalten der Heizung im Dampferzeuger eintritt. Wegen der schon erwähnten thermischen Trägheit aller Teile des Dampferzeugers vergeht eine weitere Zeitspanne bis wieder Dampf entsteht und in den Behandlungsraum überströmen kann. Dort muß der Dampf zuerst wieder die eingedrungene Frischluft verdrängen und alle durch die Frischluft inzwischen etwas abgekühlten Teile einschließlich der Nahrungsmittel wieder aufheizen.

Die bekannten Geräte haben demnach eine große Hysterese hinsichtlich der Dampferzeugung und auch hinsichtlich des Temperaturverlaufes im Behandlungsraum. Die Auswirkungen der Temperaturschwankungen und die Schwankungen in der Dampfzufuhr auf den Garvorgang der im Behandlungsraum vorhandenen Nahrungsmittel läßt sich nicht genau angeben, zumal sie sehr stark von der Art, insbesondere von der Temperatur, der Masse und dem Wassergehalt und damit von der Wärmekapazität der Nahrungsmittel abhängen. Das intermittierende Auftreten von Überschußdampf in merklichen Mengen wirkt sich stark auf den Energieverbrauch der Geräte, d.h. auf deren Wirtschaftlichkeit aus. Die austretenden Dampfmengen belasten die Umgebung der Geräte und stellen unter Umständen auch eine gewisse Gefahrenquelle dar.

Die vorgeschlagenen gerätetechnischen Abwandlungen und das vorgeschlagene Verfahren vermindern diese Nachteile oder beseitigen diese.

Die Aufgabe, die geschilderten und weitere Nachteile des bekannten Standes der Technik zu vermeiden, wird durch die Geräte gemäß der Vorrichtungsansprüche 1 bis 15 und die Verfahren gemäß der Ansprüche 16 bis 18 gelöst. Der Wortlaut sämtlicher Ansprüche wird hiermit durch Bezugnahme ausdrücklich zum Inhalt dieser Beschreibung gemacht.

Im Behandlungsraum werden erfindungsgemäß zwei Temperaturfühler angeordnet. Hierfür ist es sinnvoll, den Behandlungsraum durch eine oder mehrere Trennungen so zu gestalten, daß eine Aufheizzone und ein Garraum entsteht. Ein Temperaturfühler erfaßt die Temperatur des vom Gebläse angesaugten Fluids, wenn es in die Aufheizzone strömt. In der Aufheizzone überträgt die Heizung ihre Energie auf das Fluid. Der zweite Temperaturfühler erfaßt die Temperatur des durch die Heizung in der Aufheizzone erwärmten Fluids, wenn es in den Garraum zurückströmt.

Im Gegensatz zu aus dem Stand der Technik bekannten Geräten wird bei der Erfindung eine Temperaturdifferenz innerhalb des Gerätes selbst gemessen und zwar an dem innerhalb des Gerätes zirkulierenden Fluid. Durch die auf diese Weise ermöglichte ständige Bestimmung dieser Temperaturdifferenz ist eine genaue Steuerung des Gerätes und damit eine besonders wirtschaftliche Arbeitsweise möglich.

Durch den gemessenen Temperaturunterschied kann man genau feststellen, welche Energiemenge im Garraum dem Fluid entzogen wird und welche Energiemenge bei aktiver Heizung in der Aufheizzone von der Heizung an das Fluid übertragen wird. Der Energieentzug im Garraum ist abhängig von der Temperatur, der Masse und dem Wassergehalt und damit von der Wärmekapazität der Nahrungsmittel, welche sich im Garraum befinden. Die Energiemenge, welche in der Aufheizzone an das Fluid übertragen wird, ist abhängig von der wirksamen Heizleistung.

Durch Leistungshalbleiter kann die Energiezufuhr zur Aufheizzone, z.B. mit einer Impulspaketsteuerung, praktisch stufenlos geregelt werden. Eine solche Halbleitersteuerung kann in einer dem Fachmann bekannten Weise ausgeschaltet sein.

So wird bei leerem Ofen für jede Temperatur ein Energieverlust ermittelt. Bei einer idealen Isolierung ist die Wärmeabgabe gleich Null. Bei einer normalen Isolierung entzieht das Gehäuse des Garraums dem Fluid Wärmeenergie und strahlt sie nach außen ab. Die Größe der Energieabstrahlung wird bestimmt durch die Güte der Isolierung und dem Temperaturgefälle zwischen der Temperatur des Fluids und der Raumtemperatur. Je höher die Temperatur des Fluids, desto mehr Leistung wird benötigt, um das Fluid auf dieser Temperatur zu halten. So kann man eine Wärmeverlust- oder Energieverlustkurve für ein bestimmtes Gerät ermitteln.

Nach Ermittlung der Wärmeverlustkurve, welche die Energieabstrahlung des Gerätes bei verschiedenen Temperaturen angibt, kann man davon ausgehen, daß die darüber hinaus dem Fluid entzogene Energie vom Gargut aufgenommen wird.

Beschickt man nun den Garraum des Ofens mit Gargut, so wird das Gargut dem Fluid Wärmeenergie entziehen und die Temperatur des Fluids im Garraum wird sinken. Steigert man nun die Energiezufuhr stufenlos, so wird ein Punkt erreicht werden, bei dem die im Aufheizraum auf das Fluid übertragene Energie die gleiche Größe hat wie die Energiemenge, welche das Gargut dem Fluid im Garraum entzieht. Die Menge der eingespeisten Energie, welche über der Wärmeverlustkurve des Kombidämpfers liegt, ist also die Energieaufnahme des Gargutes.

Die Nahrungsmittel, welche sich im Garraum befinden, sind, unabhängig von der Temperatur, der Masse und dem Wassergehalt und damit von der Wärmekapazität, Bestandteil eines Regelkreises. Es ist möglich, die noch aufzubringende Energiemenge bis zu einem bestimmten Gargutzustand festzustellen. Ein zu starkes Erhitzen des Garraumes über die eingestellte Temperatur hinaus kann mit diesem Verfahren verhindert werden.

Mit dieser Art der Steuerung und Regelung kann man die Energieaufnahme, also den Zustand des Gargutes, ermitteln. Die Menge und die Temperatur des Gargutes bestimmt also die Energiemenge, welche dem Ofen zugeführt wird.

Leitet man Wasserdampf in den heißen Garraum, so wird der Dampf im heißen Garraum nicht kondensieren und der Dampf muß den Garraum als Wasserdampf wieder verlassen. Die von den zwei Temperaturfühlern gemessenen Werte werden unabhängig von ihrem Wert annähernd identisch sein. Es wird also kein Dampf benötigt.

Beschickt man nun den Ofen mit Gargut und leitet Wasserdampf in den heißen Garraum, so wird der Dampf im heißen Garraum am kalten Gargut kondensieren. Beschickt man den Ofen mit einer großen Menge Gargut, wird an dieser großen Menge viel Wasserdampf kondensieren. Ebenso bei einer kleinen Menge von sehr kaltem, gefrorenem Gargut.

Die Nahrungsmittel, welche sich im Garraum befinden, sind also abhängig von der Temperatur, der Masse und dem Wassergehalt und damit von der Wärmekapazität bestimmend für die Menge des an ihr kondensierenden Wasserdampfes.

Dieser kondensierende Wasserdampf kühlt das Fluid im Garraum ab, so daß ein Temperaturunterschied zwischen dem aus der Aufheizzone in den Garraum einströmendem Fluid und dem aus dem Garraum in die Aufheizzone strömenden Fluid entsteht. Dieser Temperaturunterschied ist ein Maßstab für die kondensierte Dampfmenge. Im Gegensatz zu den bekannten Methoden der Dampfmengenbestimmung erlaubt das hier beschriebene Verfahren eine genaue Dosierung der Dampfmenge und eine frühzeitige Erkennung des zu erwartenden Dampfmengenüberschusses.

Mit Bestimmung der Energieaufnahme des Gargutes ist auch die Menge des kondensierenden Dampfes auf dem Gargut bekannt und die zu produzierende Dampfmenge kann den Erfordernissen angepaßt werden.

Bei der Erfindung kann das verwendete Gebläse den jeweiligen gewünschten Gegebenheiten angepaßt sein. So können Tangential- oder Radialgebläse üblicher Bauart eingesetzt werden. Bei den beschriebenen Geräten wird die Luftbewegung vorzugsweise durch ein Radialgebläse erreicht. Dieses saugt das Fluid zentral an und drückt es durch seine Drehbewegung seitlich an Heizelementen vorbei, durch Luftleitöffnungen wieder in den Behandlungsraum zurück.

Nach der Erfindung ist der erste (primäre) Temperaturfühler, welcher die Temperatur des Fluids auf dem Weg von der Aufheizzone in den Garraum erfaßt, vorzugsweise so angebracht, daß die Strahlungswärme der Heizungen die Messung nicht beeinträchtigt. Dies kann durch einen ersten (primären) Luftleitkanal (Luftleitung), in welchem der Fühler angebracht ist, verhindert werden.

In Weiterbildung ist ein zweiter (sekundärer) Luftleitkanal (Luftleitung) vorgesehen, der vorzugsweise die Abflußleitung oder einen Bypass der Abflußleitung mit der Ansaugöffnung beispielsweise des Radialgebläses verbindet. In diesem sekundären Luftleitkanal wird ein zweiter (sekundärer) Temperaturfühler so angeordnet, daß er von der Strahlungswärme des Behandlungsraumes nicht beeinflußt wird.

Bei einer entsprechenden Anordnung wird beispielsweise bei sich drehendem Lüfterrad eines Radialgebläses immer ein ständiger Luftstrom vom Behandlungsraum durch die Abflußleitung und durch den sekundären Luftleitkanal zur Ansaugöffnung geleitet. Auf diesem Wege kühlt sich das Fluid im Bereich der Abflußleitung und des Luftleitkanals ab. So wird über diese Abkühlstrecke immer eine Temperaturdifferenz zwischen Garraumtemperatur und dem vom Lüfterrad durch den sekundären Luftleitkanal angesaugtem Luftstrom meßbar sein.

Bei leerem Behandlungsraum und ohne Dampfzuführung ist die Luftbewegung in der Abflußleitung allein von der Saugwirkung des Lüfterrades abhängig. Strömt Dampf in den Behandlungsraum, so wird dieser am kalten Behandlungsraum kondensieren, nicht durch die Abflußleitung austreten und so den Luftstrom durch die Abflußleitung nicht beeinflussen. Wird aber der Behandlungsraum oder das Gargut durch den kondensierenden Dampf erhitzt, wird immer weniger Dampf kondensieren. Durch diesen Effekt wird langsam erreicht, daß mehr Dampf produziert wird wie im Behandlungsraum kondensiert. Dieser zuviel produzierte Dampf tritt dann durch die Auslaßöffnung aus und beeinflußt damit die Luftbewegung in der Abflußleitung. Durch die sich langsam erhöhende Luftgeschwindigkeit in der Abflußleitung wird sich der Wärmeverlust des Fluids in der Abflußleitung verringern und die durch den zweiten Temperaturfühler bestimmte Temperatur des durch den sekundären Luftleitkanal zur Ansaugöffnung geleiteten Fluids erhöht sich.

Durch Änderung der Temperaturdifferenz zwischen Garraumtemperatur (erster Temperaturfühler) und angesaugter Luft (zweiter Temperaturfühler) läßt sich frühzeitig erkennen, wann eine Dampfüberproduktion eintreten wird oder welche Leistung dem Dampferzeuger zugeführt werden muß, um den Garraum möglichst schnell und vollständig mit Dampf zu füllen.

Der Vorteil gegenüber den bekannten Meßmethoden, welche erst einen schon bestehenden Dampfüberschuß durch starken Dampfaustritt erkennen, besteht darin, daß durch ständiges Messen am zirkulierenden Fluid ein erst entstehender Dampfüberschuß erkannt wird. Dadurch wird beim Dämpfen oder beim kombinierten Einsatz von Dampf und Heißluft der Dampfaustritt aus dem Gerät verhindert oder minimiert.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich oder zu mehreren in Kombination miteinander verwirklicht sein.

In den Zeichnungen zeigen:
- Fig. 1: die schematische Schnittansicht eines erfindungsgemäßen Gerätes, und
- Fig. 2: eine weitere Ausführungsform des erfindungsgemäßen Gerätes, ebenfalls in schematischer Schnittansicht.

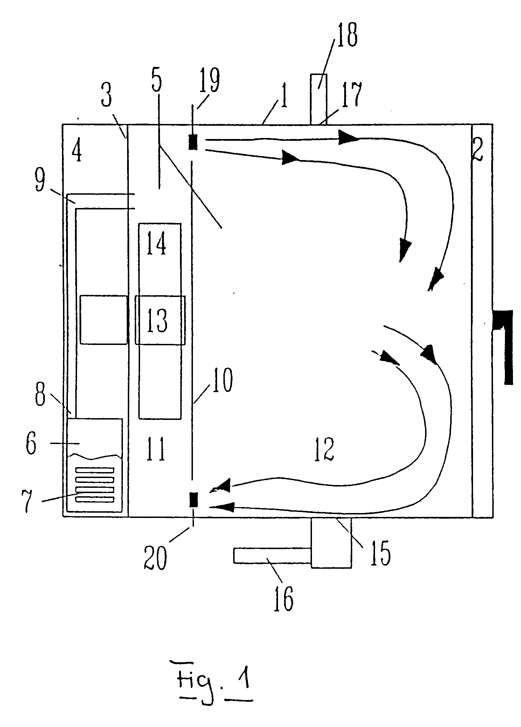

Wie bereits oben beschrieben, weist das Gerät gemäß Fig. 1 ein Gehäuse 1 auf, das mit einer Tür 2 zu öffnen und zu schließen ist. Innerhalb des Gehäuses 1 ist eine vorzugsweise gasdichte Trennwand 3 vorhanden, die das Innere des Gehäuses 1 in einen Installationsraum 4 und einen Behandlungsraum 5 für die Nahrungsmittel aufteilt. Im Installationsraum 5 ist ein Dampferzeuger 6 angeordnet, der mit Hilfe einer steuerbaren Wärmequelle 7 beheizbar ist. Die Dampfauslaßöffnung 8 des Dampferzeugers 6 steht über eine Verbindungsleitung 9 mit dem Behandlungsraum 5 in Verbindung.

Der Behandlungsraum 5 selbst ist durch eine weitere Trennwand 10 in eine sogenannte Aufheizzone 11 und in den eigentlichen Garraum 12 unterteilt. Dabei sind Öffnungen in der Trennwand 10 vorhanden, durch die das zur Wärmebehandlung der Nahrungsmittel verwendete Fluid aus der Aufheizzone 11 in den Garraum 12 und aus diesem Garraum 12 zurück in die Aufheizzone 11 gelangen kann.

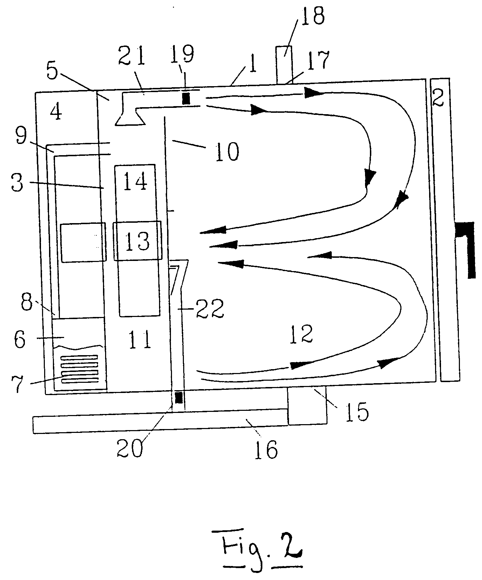

Innerhalb der Aufheizzone 11 ist ein Gebläse 13 und eine Heizung 14 vorgesehen. Das Gebläse 13 dient dazu, das im Behandlungsraum 5 vorhandene Fluid umzuwälzen, während die Heizung 14 zur Erwärmung des in der Aufheizzone 11 vorhandenen Fluids vorgesehen ist. Wird beispielsweise ein Tangentialgebläse als Gebläse 13 verwendet, so sind die genannten Öffnungen der Trennwand 10 z.B. Schlitze an der Ober- und Unterseite dieser Trennwand 10, durch die die Zirkulation des Fluids ermöglicht wird. Bei Einsatz eines Radialgebläses kann ringsum ein Schlitz an der Trennwand 10 und eine zentrale Ansaugöffnung für das Radialgebläse vorgesehen sein (siehe auch Fig. 2).

An der Unterseite des Gehäuses 1 befindet sich vorzugsweise am Boden des Behandlungsraumes 5 eine Auslaßöffnung 15, mit deren Hilfe tropfbare (kondensierte) Fluide aus dem Behandlungsraum 5 entfernt werden können. Zu diesem Zweck ist an die Auslaßöffnung 15 eine Abflußleitung 16 angeschlossen. Weiterhin befindet sich an der Oberseite des Gerätes, vorzugsweise an der Oberseite des Behandlungsraumes 5, eine Auslaßöffnung 17, mit deren Hilfe nicht tropfbare (gas- bzw. dampfförmige) Fluide aus dem Behandlungsraum 5 entweichen können. Zu diesem Zweck ist eine Abführleitung 18 an die Auslaßöffnung 17 angeschlossen.

Die Konstruktion des in Fig. 1 dargestellten Geräts ist so gewählt, insbesondere das Gebläse 13 so ausgebildet, daß das in der Aufheizzone 11 erwärmte Fluid an der Oberseite des Behandlungsraumes 5 aus der Aufheizzone 11 in den Garraum 12 übertritt. Umgekehrt wird das aus dem Garraum 12 wieder austretende Fluid vorzugsweise am Boden des Gerätes entlanggeführt. So kann bei der in Fig. 1 dargestellten Ausführungsform beispielsweise ein Tangentialgebläse vorgesehen sein. Dementsprechend sind in den entsprechenden Bereichen des Behandlungsraumes 5 gemäß Fig. 1 ein erster Temperaturfühler 19 zur Bestimmung der Temperatur des aus der Aufheizzone 11 in den Garraum 12 strömenden Fluids und ein zweiter Temperaturfühler 20 zur Bestimmung der Temperatur des aus dem Garraum 12 ausströmenden Fluids, d.h. im wesentlichen des vom Gebläse 13 angesaugten Fluids vorhanden. Durch den so gemessenen Temperaturunterschied kann man ständig genau feststellen, welche Energiemenge dem Fluid im Garraum 12 entzogen wird und welche Energiemenge durch die Heizung 14 in der Aufheizzone 11 auf das Fluid übertragen wird. Dementsprechend können dann die Heizung 14, die Wärmequelle 7 des Dampferzeugers 6 oder beide gesteuert werden. Die Zirkulation des Fluids im Gerät ist mit Hilfe der in Fig. 1 dargestellten Pfeile angedeutet.

In Fig. 2 ist eine weiter bevorzugte Ausführungsform des erfindungsgemäßen Gerätes dargestellt. Aus Gründen der Übersichtlichkeit wurden im wesentlichen die gleichen Bezugszeichen wie in Fig. 1 verwendet. Insoweit kann auch auf die Beschreibung von Fig. 1 verwiesen und Bezug genommen werden.

Gemäß Fig. 2 ist der erste Temperaturfühler 19 in einem sogenannten ersten Luftleitkanal 21 angeordnet. Es handelt sich dabei um ein Verbindungsrohr zwischen der Aufheizzone 11 und dem Garraum 12, das man auch als sogenanntes Fühlerrohr bezeichnen kann. Auf diese Weise wird die Temperatur des Fluids auf dem Weg von der Aufheizzone 11 in den Garraum 12, wie bereits beschrieben, im wesentlichen frei von störenden Einflüssen gemessen.

Der zweite Temperaturfühler 20 ist in einem sogenannten zweiten Luftleitkanal 22 (Verbindungsleitung, Fühlerrohr) zwischen der Abflußleitung 16 und einer Ansaugöffnung des Gebläses 13 vorgesehen. In der in Fig. 2 dargestellten Ausführung ist das Gebläse 13 als sogenanntes Radialgebläse ausgebildet, so daß der zweite Luftleitkanal 22 gemäß Fig. 2 im Bereich der zentralen Ansaugöffnung dieses Radialgebläses endet. Die Zirkulation des Fluids im Gerät ist mit Hilfe der in Fig. 2 dargestellten Pfeile angedeutet.

Durch die in Fig. 2 dargestellte bevorzugte Anordnung der beiden Temperaturfühler 19 und 20 läßt sich in der beschriebenen Weise eine besonders effektive Regulierung der Wärmebehandlung des Garguts und somit eine besonders energiesparende Arbeitsweise des Geräts verwirklichen.

## Patentansprüche

1. Gerät für die Wärmebehandlung von Nahrungsmitteln, mit den Merkmalen:
- es ist ein Gehäuse (1) mit einer Tür (2) vorhanden,
- in dem Gehäuse sind durch wenigstens eine gasdichte Trennwand (3) wenigstens zwei Räume, Installationsraum (4) und Behandlungsraum (5), voneinander abgetrennt,
- in dem Installationsraum ist ein Dampferzeuger (6) angeordnet,
- der durch eine steuerbare Wärmequelle (7) heizbar ist,
- dessen Dampfauslaßöffnung (8) über eine Verbindungsleitung (9) mit dem Behandlungsraum (5) in Verbindung steht,
- der Behandlungsraum (5) ist durch eine Trennwand (10) in eine Aufheizzone (11) und in einen Garraum (12) unterteilt,
- in der Aufheizzone (11) ist ein Gebläse (13) angeordnet,
- mittels dessen das im Behandlungsraum (5) vorhandene Fluid umwälzbar ist,
- in der Aufheizzone (11) ist eine Heizung angeordnet,
- mittels derer sich das sich in der Aufheizzone (11) befindliche Fluid erwärmen läßt,
- am Boden des Behandlungsraumes (5) befindet sich eine Auslaßöffnung (15),
- an die eine Abflußleitung (16) insbesondere für die tropfbaren Fluide des Behandlungsraumes (5) angeschlossen ist,
- im oberen Bereich des Behandlungsraumes (5) ist eine Auslaßöffnung (17) vorhanden,
- an die eine Abführleitung (18) insbesondere für die nicht tropfbaren Fluide des Behandlungsraumes (5) angeschlossen ist,
gekennzeichnet durch das Merkmal:
- die Energieaufnahme der Nahrungsmittel wird zur Steuerung der Energiemenge benutzt, welche auf das Fluid übertragen wird.

2. Gerät nach Anspruch 1, gekennzeichnet durch das Merkmal: die Heizung im Behandlungsraum ist mit einer Steuerung verbunden, welche ein stufenloses Steuern der Heizleistung ermöglicht.

3. Gerät nach Anspruch 1, gekennzeichnet durch das Merkmal: die Heizung im Dampferzeuger ist mit einer Steuerung verbunden, welche ein stufenloses Steuern der Dampfmenge ermöglicht.

4. Gerät nach einem der Ansprüche 1 bis 3, gekennzeichnet durch das Merkmal:
die Energieaufnahme der Nahrungsmittel wird durch eine Temperaturdifferenz an den Punkten (Punkte 19 + 20) ermittelt.

5. Gerät nach einem der Ansprüche 1 bis 3, gekennzeichnet durch das Merkmal:
die Energieaufnahme der Nahrungsmittel wird durch eine Strömungsdifferenz an den Punkten (Punkte 19 + 20) ermittelt.

6. Gerät nach einem der Ansprüche 1 bis 3, gekennzeichnet durch das Merkmal:
die Energieaufnahme der Nahrungsmittel wird durch eine Druckdifferenz an den Punkten (Punkte 19 + 20) ermittelt.

7. Gerät nach einem der Ansprüche 1 bis 3, gekennzeichnet durch das Merkmal:
die Energieaufnahme der Nahrungsmittel wird durch eine optische Einrichtung ermittelt.

8. Gerät für die Wärmebehandlung von Nahrungsmitteln, insbesondere nach einem der vorhergehenden Ansprüche, dadurch gekennzeichnet, daß mindestens zwei Temperaturfühler (19, 20) vorzugsweise in einem Behandlungsraum (5) vorgesehen sind, zwischen denen mindestens eine Temperaturdifferenz meßbar ist.

9. Gerät nach Anspruch 8, dadurch gekennzeichnet, daß mindestens ein erster Temperaturfühler (19) vorgesehen ist, mit dessen Hilfe die Temperatur eines aus einer Aufheizzone (11) in einen Garraum (12) strömenden Fluids meßbar ist.

10. Gerät nach Anspruch 9, dadurch gekennzeichnet, daß der erste Temperaturfühler (19) in dem Bereich des Behandlungsraumes (5) angeordnet ist, in dem das Fluid aus der Aufheizzone (11) in den Garraum (12) strömt.

11. Gerät nach Anspruch 9 oder Anspruch 10, dadurch gekennzeichnet, daß der erste Temperaturfühler (19) in einem ersten Luftleitkanal (21) angeordnet ist, der vorzugsweise zwischen der Aufheizzone (11) und dem Garraum (12) vorgesehen ist.

12. Gerät nach einem der Ansprüche 8 bis 11, dadurch gekennzeichnet, daß mindestens ein zweiter Temperaturfühler (20) vorgesehen ist, mit dessen Hilfe die Temperatur eines aus einem Garraum (12), insbesondere zu einer Ansaugöffnung eines Gebläses (13) strömenden Fluids meßbar ist.

13. Gerät nach Anspruch 12, dadurch gekennzeichnet, daß der zweite Temperaturfühler (20) in einem zweiten Luftleitkanal (22) angeordnet ist, der vorzugsweise zwischen dem Garraum (12) und der Ansaugöffnung des Gebläses (13) vorgesehen ist.

14. Gerät nach Anspruch 12 oder Anspruch 13, dadurch gekennzeichnet, daß der zweite Luftleitkanal (22) zwischen einer Auslaßöffnung (15), insbesondere zwischen einer Abflußleitung (16) und/oder einem Bypass einer solchen Abflußleitung (16), und der Ansaugöffnung des Gebläses (13) vorgesehen ist.

15. Gerät nach einem der Ansprüche 8 bis 14, dadurch gekennzeichnet, daß die Temperaturfühler (19, 20) mit Steuerungsmitteln zur Kontrolle und Regelung eines Dampferzeugers (6) und/oder einer Heizung (14) verbunden sind.

16. Verfahren zur Wärmebehandlung von Nahrungsmitteln mit Hilfe eines Fluids, insbesondere unter Verwendung eines Gerätes nach einem der vorhergehenden Ansprüche, dadurch gekennzeichnet, daß die Energieaufnahme der Nahrungsmittel während der Wärmebehandlung vorzugsweise ständig bestimmt wird und die erhaltenen Werte zur Steuerung der Fluidmenge, der Fluidzusammensetzung und/oder der auf das Fluid übertragenen Energiemenge eingesetzt werden.

17. Verfahren nach Anspruch 16, dadurch gekennzeichnet, daß die Energieaufnahme der Nahrungsmittel durch Messen mindestens einer Temperaturdifferenz zwischen mindestens zwei Temperaturfühlern im Fluid bestimmt wird.

18. Verfahren nach Anspruch 16 oder Anspruch 17, dadurch gekennzeichnet, daß die Energieaufnahme der Nahrungsmittel durch Messen mindestens einer Temperaturdifferenz zwischen mindestens einem ersten Temperaturfühler, der in einem zwischen einer Aufheizzone für das Fluid und einen Garraum für die Nahrungsmittel vorgesehenen ersten Luftleitkanal angeordnet ist, und mindestens einen zweiten Temperaturfühler, der in einem zwischen einer Abluftleitung und einer Ansaugöffnung eines Gebläses vorgesehenen zweiten Luftleitkanal angeordnet ist, im Fluid bestimmt wird.
